# FASCICULE DE BREVET EUROPEEN

(11) **EP 0 452 234 B1**
(45) Date de publication et mention de la délivrance du brevet: **11.09.1996**
(21) Numéro de dépôt: 91420120.7
(22) Date de dépôt: 09.04.1991
(51) Int. Cl.: F16K 7/04

(54) **Vanne à débit variable commandée électriquement**
Elektrisch gesteuertes Ventil mit variablem Durchfluss
Variable electrically-actuated flow valve

(30) Priorité: 12.04.1990 FR 9004967
(43) Date de publication de la demande: 16.10.1991
(73) Titulaire: CROUZET Electroménager, F-26000 Valence (FR)
(72) Inventeur: Blanc, Alain, F-26500 Bourg les Valence (FR); Girardin, Denis, F-26300 Alixan (FR); Vollot, Jean, F-07800 Saint Georges les Bains (FR)
(74) Mandataire: de Beaumont, Michel

(56) Documents cités:
- EP-A- 0 321 996
- DE-A- 2 753 291
- DE-U- 8 335 587
- FR-A- 2 331 088
- US-A- 4 559 036

## Description

La présente invention concerne, de façon générale, des vannes à débit variable commandées électriquement.

Lorsque l'on souhaite commander un débit d'écoulement d'un fluide, liquide ou gazeux, on utilise généralement une vanne variable commandée, par exemple, de façon électrique. Une telle vanne à débit variable est constituée d'un corps de vanne dont l'ouverture peut varier d'une valeur minimum, par exemple une valeur nulle correspondant à la fermeture de la vanne, à une valeur maximum correspondant à l'ouverture complète de la vanne. Un dispositif électromagnétique, par exemple un électroaimant ou un moteur électrique, commande le degré d'ouverture de la vanne.

La présente invention concerne plus particulièrement des vannes à débit variable commandées électriquement, de conception simple et peu onéreuse, pouvant être utilisées dans des appareils de grande série réalisés au moindre coût.

La présente invention concerne plus précisement un type particulier de vannes comprenant un tube en matériau élastique auquel est associé un mécanisme de commande provoquant un niveau variable d'aplatissement élastique du tube afin de contrôler le débit d'écoulement du fluide à travers le tube. Lorsque le tube est complètement aplati, il est obstrué et la vanne est en position fermée.

Ce type de vanne permet de contrôler l'écoulement d'un fluide de façon continue entre un débit nul et un débit maximum. Le mécanisme de commande doit permettre de positionner une pièce venant pincer le tube pour ajuster le débit. Pour effectuer un tel ajustement de débit, les moyens classiques utilisés jusqu'à ce jour se sont révélés relativement complexes. On a pu, par exemple dans le document DE-U-83 35 587 (sur lequel le préambule de la revendication 1 est basé), envisager d'utiliser un moteur électrique pas à pas associé à un détecteur de débit pour réaliser un asservissement du débit. De tels dispositifs présentent l'inconvénient d'être complexes et d'un coût relativement élevé.

Un objet de la présente invention est de prévoir une vanne à débit variable commandée électriquement, d'une conception plus simple que celle des vannes de ce type connues actuellement, et d'un coût inférieur.

La présente invention concerne plus particulièrement une vanne à débit variable comprenant une pièce de commande de débit sollicitée par un ressort vers une position de fermeture de la vanne, et un moteur pour déplacer la pièce de commande à l'encontre de la force du ressort.

La présente invention est définie par la revendication 1. Un mode préféré de réalisation de l'invention est défini par la revendication 2.

Selon une caractéristique de l'invention, le moteur est un moteur à courant continu et la vanne comprend : des moyens pour sélectionner une ouverture de vanne souhaitée et pour déterminer en fonction de cette ouverture sélectionnée un intervalle de temps ; un dispositif d'alimentation pour fournir au moteur un premier courant constant de valeur suffisante pour faire tourner le moteur pendant ledit intervalle de temps, et ensuite un deuxième courant constant de valeur faible jusqu'à la prochaine sélection d'une ouverture de vanne, ce courant de valeur faible étant suffisant pour maintenir le moteur dans sa position à l'encontre de la force du ressort.

Selon un mode de réalisation de la présente invention, la vanne comprend un carter, un tube en matériau élastique dans lequel peut s'écouler un fluide, et un mécanisme de commande provoquant un niveau variable de pincement du tube. Ce mécanisme comprend ladite pièce de commande montée par une articulation dans le carter et comportant une zone d'appui pour effectuer le pincement du tube ainsi qu'un secteur denté centré sur l'axe d'articulation ; un pignon monté en rotation dans le carter et formant avec le secteur denté un engrenage continuellement en prise ; et ledit moteur entraînant en rotation le pignon.

Selon un mode de réalisation de la présente invention, ledit ressort agit continuement sur la pièce de commande pour la faire pivoter autour de son axe d'articulation dans un premier sens de rotation provoquant le pincement du tube, et le moteur agit sur la pièce de commande pour la faire pivoter dans le sens de rotation opposé provoquant une diminution du pincement du tube.

Selon un mode de réalisation de la présente invention, la liaison mécanique entre le moteur et la pièce de commande est réversible sous l'action du ressort.

Le fait d'utiliser un moteur électrique à courant continu pour provoquer à la fois le déplacement de la pièce de commande servant au pincement du tube et son maintien dans une position déterminée permet de constituer un dispositif particulièrement bon marché parce que les composants utilisés sont en faible nombre et peu sophistiqués.

Ces objets, caractéristiques et avantages ainsi que d'autres de la présente invention seront exposés plus en détail dans la description suivante de modes de réalisation particuliers faite en relation avec les figures jointes parmi lesquelles :
la figure 1 est une vue en coupe d'une vanne à débit variable selon l'invention, en position de fermeture, la coupe étant prise selon la ligne A-A de la figure 2 ;
la figure 2 est une vue en coupe selon la ligne B-B de la figure 1 ;
la figure 3 représente la même vanne que celle de la figure 1 mais en position ouverte ;
la figure 4 est un schéma bloc du dispositif électronique de commande de la vanne selon l'invention ;
la figure 5 est un diagramme représentant la correspondance entre le courant électrique de commande de la vanne selon l'invention et le débit d'écoulement du fluide obtenu ; et
la figure 6 représente une courbe établissant la relation entre le courant d'alimentation du moteur électrique utilisé dans une vanne selon la présente invention et la vitesse de rotation de ce moteur.

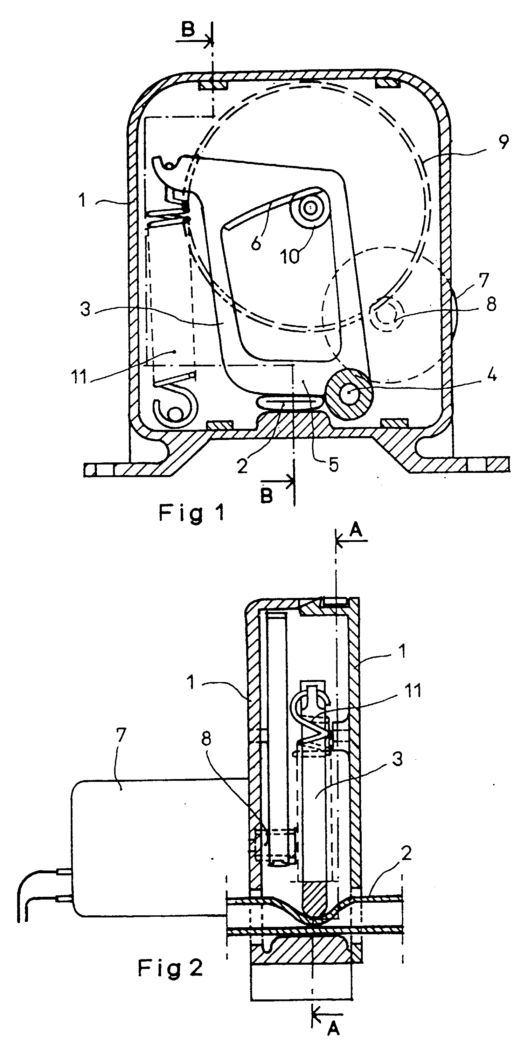

En se reportant aux figures 1 et 2, qui représentent la même vanne à débit variable selon l'invention en position fermée, on distingue un carter 1 renfermant l'ensemble d'un mécanisme de commande qui sera détaillé par la suite. Le carter 1 est traversé par un tube 2 en matériau élastique. L'entrée et la sortie de la vanne sont constituées respectivement par les deux extrémités du tube 2. La vanne est dite en position fermée parce que le tube est complètement aplati à l'intérieur du carter 1, interdisant de ce fait tout passage du fluide à l'intérieur du tube.

Le mécanisme de commande comprend tout d'abord une pièce de commande 3 montée sur une articulation 4 dans le carter 1. La pièce de commande 3 peut pivoter autour de l'articulation 4 dans les limites du débattement possible dans le carter 1. La pièce de commande 3 comporte une zone d'appui 5 destinée à venir provoquer le pincement ou l'aplatissement du tube 2 afin de réduire le débit d'écoulement. Lorsque la pièce de commande 3 est déplacée dans le sens contraire des aiguilles d'une montre (selon la représentation de la figure 1) jusqu'au maximum de son débattement, la zone d'appui 5 pince complètement le tube pour assurer sa fermeture. Cette position de la pièce de commande 3 est celle représentée en figures 1 et 2.

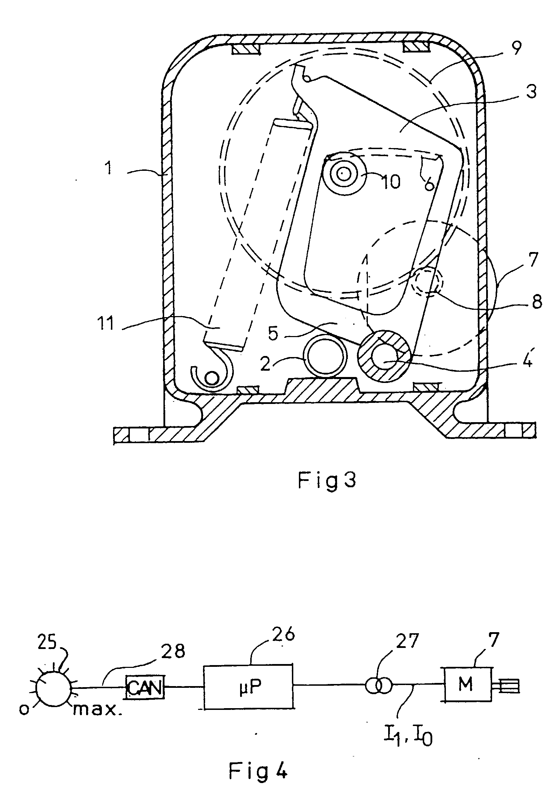

Dans la figure 3, la pièce de commande 3 est déplacée dans le sens des aiguilles d'une montre jusqu'à son débattement maximum, de sorte que la zone d'appui 5 ne pince pratiquement plus le tube 2, cette position correspondant à l'ouverture complète de la vanne.

La pièce de commande 3 comporte un secteur denté 6 centré sur l'axe de l'articulation 4. Un moteur électrique à courant continu 7 est fixé rigidement sur la paroi extérieure du carter 1, de sorte que son axe sur lequel est monté un pignon 8 traverse cette paroi du carter 1, le pignon 8 étant disposé à l'intérieur du carter 1. La rotation du pignon moteur 8 entraîne, par des premier et second engrenages démultiplicateurs en série, la rotation de la pièce de commande 3 autour de l'articulation 4. Le premier engrenage est constitué par le pignon 8 en prise avec une roue dentée 9 et le second engrenage est constitué par un pignon 10 lié rigidement à la roue dentée 9 et en prise avec le secteur denté 6 de la pièce de commande 3. Si les rayons des pignons 8 et 10 sont relativement faibles et les rayons de la roue dentée 9 et du secteur denté 6 sont relativement grands, les premier et second ainsi constitués procurent une grande démultiplication.

La pièce de commande 3 comporte un point d'attache pour un ressort de traction 11 dont l'autre extrémité est fixée au carter 1. Le ressort 11 est disposé de façon qu'il exerce sur la pièce de commande 3 un couple tendant à obturer complètement le tube 2 par pincement. Les premier et second engrenages sont réversibles, c'est-à-dire que, sous l'action du ressort 11 et en l'absence de toute alimentation électrique du moteur 7, la pièce de commande 3 sollicitée par le ressort 11 se met à tourner dans le sens contraire des aiguilles d'une montre jusqu'à venir en position fermée, comme cela est représenté dans les figures 1 et 2.

Lorsque le moteur à courant continu 7 est alimenté, le pignon 8 tourne dans le sens contraire des aiguilles d'une montre, ce qui entraîne en rotation dans le sens des aiguilles d'une montre la pièce de commande 3. En maintenant ainsi l'alimentation électrique du moteur 7, la pièce de commande 3 tourne lentement, à une vitesse sensiblement constante, et cela jusqu'à venir en butée dans la position extrême correspondant à l'ouverture complète de la vanne, comme cela est représenté en figure 3.

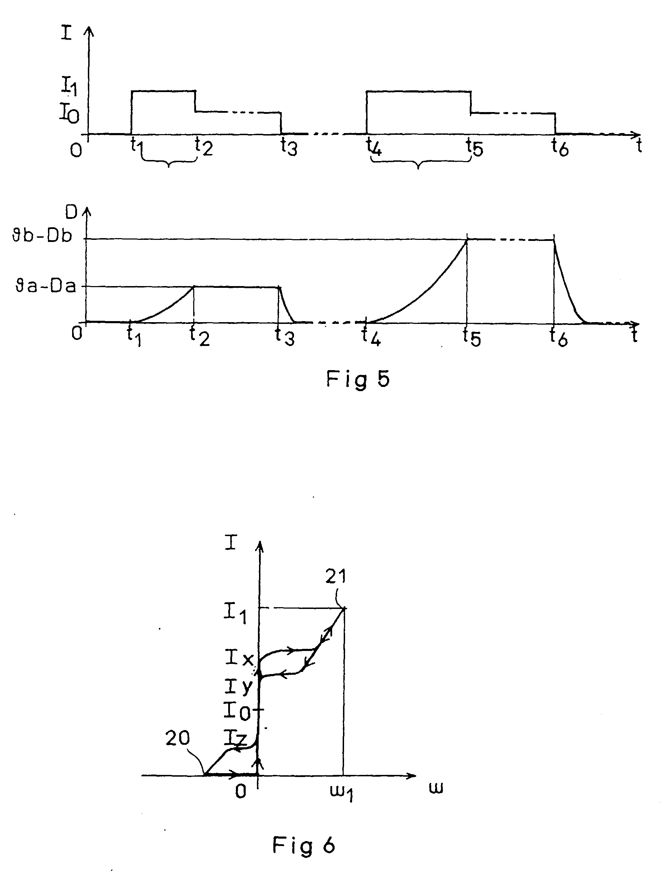

La vanne à débit variable commandée électriquement selon la présente invention n'est pas constituée uniquement par les pièces mécaniques qui viennent d'être décrites mais comporte également un dispositif d'alimentation particulier du moteur électrique à courant continu 7 qui va être décrit ci-après, en relation avec les diagrammes de la figure 5.

En l'absence d'alimentation en courant électrique du moteur, on a vu précédemment que la vanne revenait toute seule en position de fermeture. Afin de commander la vanne pour qu'elle provoque un débit déterminé d'écoulement du fluide, ce débit étant choisi entre zéro et le maximum possible, le dispositif d'alimentation envoie à un instant t₁ un courant électrique d'alimentation du moteur d'intensité I₁ et maintient ce courant I₁ constant perdant une durée déterminée Tₐ qui se termine à l'instant t₂. Pendant le laps de temps Tₐ, le moteur électrique à courant continu 7 tourne à sa vitesse nominale quasiment constante de façon à amener la pièce de commande 3 jusqu'à une position intermédiaire pour laquelle le tube 2 est partiellement pincé de façon que l'écoulement du fluide dans le tube s'effectue selon le débit Dₐ souhaité. A l'instant t₂, le dispositif d'alimentation réduit brusquement l'intensité du courant électrique d'alimentation du moteur pour la ramener à une valeur I₀ et maintient cette intensité I₀ pendant tout le temps durant lequel on souhaite maintenir le débit d'écoulement du fluide à la valeur constante Dₐ.

Si l'on souhaite ensuite, à un instant t₃, arrêter l'écoulement du fluide dans la vanne, il suffit de supprimer l'alimentation en courant électrique du moteur, ce qui ramène la vanne en position fermée sous la seule action du ressort 11, comme cela a été expliqué précédemment. Le fait de pouvoir maintenir un débit constant Dₐ, c'est-à-dire de pouvoir maintenir une position intermédiaire constante de la pièce de commande 3 en ramenant brusquement l'intensité du courant d'alimentation du moteur à la valeur constante I₀ peut paraître à première vue paradoxal parce qu'en général on envoie un courant d'alimentation dans un moteur électrique en vue de le faire tourner et non de le bloquer dans une position particulière. Selon la présente invention, on utilise donc deux niveaux d'intensité, I₁ et I₀, du courant d'alimentation du moteur, le premier niveau I₁ étant prévu pour faire tourner le moteur jusqu'à la position souhaitée d'ouverture de la vanne et le second niveau I₀ étant prévu pour maintenir immobile le moteur. Ceci permet de simplifier au maximum les composants mécaniques et électriques de la vanne selon l'invention, afin de constituer une vanne particulièrement simple et d'un coût de revient très bas.

On se reportera maintenant à la figure 6 pour expliquer comment, selon l'invention, on peut maintenir une ouverture de vanne constante pendant une durée quelconque en appliquant au moteur électrique 7 une intensité de courant particulière I₀. On considère tout d'abord que le moteur 7 est arrêté. Si on alimente en courant électrique le moteur selon une intensité I que l'on fait croître lentement, le moteur reste bloqué, à cause des frottements de l'ensemble du mécanisme, jusqu'à ce que l'intensité du courant atteigne une valeur Iₓ, puis se met ensuite à tourner d'autant plus vite que l'intensité augmente jusqu'à atteindre la vitesse w₁ correspondant à l'intensité I₁ (repère 21 de la figure 6). Si ensuite on réduit progressivement l'intensité d'alimentation du moteur, le moteur ralentit progressivement jusqu'à se bloquer pour une intensité d'alimentation I_{y}, reste ainsi bloqué jusqu'à ce que l'intensité soit abaissée jusqu'à la valeur I_{z}, puis se met alors à tourner en sens inverse, sous l'action du ressort 11, jusqu'à ce que la pièce 3 vienne en butée. Les intensités Iₓ et I_{y} sont comprises entre I₀ et I₁ et l'intensité I_{z} est comprise entre 0 et I₀. La plage d'intensité comprise entre I_{z} et I_{y} provoque dans tous les cas l'arrêt du moteur. Cette plage résulte du fait que l'ensemble du mécanisme entraîné par le moteur électrique 7 offre un certain niveau de frottement sensiblement égal pour les deux sens de rotation du moteur. L'intensité I₀ est choisie de façon à se situer au milieu de cette plage, entre les intensités I_{z} et I_{y}, de façon que cette intensité I₀ reste perpétuellement dans la plage de blocage du moteur même si les niveaux de frottement dans le mécanisme viennent à évoluer légèrement dans le temps. Si le mécanisme était exempt de tout frottement, il n'y aurait pas de discontinuité dans la courbe représentée en figure 6 qui s'étendrait selon une ligne sensiblement droite entre les points 20 et 21 extrêmes de cette courbe. Dans ce cas, la valeur I₀ de de l'intensité pour laquelle le moteur ne tournerait ni dans un sens ni dans l'autre serait une valeur unique qui ne permettrait pas, en pratique d'être sûr que le moteur ne tourne pas. Cependant, comme tout mécanisme du type engrenage procure un niveau de frottement que l'on peut déterminer de façon relativement précise, il sera toujours possible, dans un mécanisme réel, de déterminer une valeur de l'intensité d'alimentation I₀ pour laquelle le moteur se bloque quelle que soit la manoeuvre effectuée.

Dans la figure 5, on a représenté deux actions successives de commande de la vanne, la première étant destinée à provoquer l'ouverture de la vanne pour fournir un débit d'une première valeur choisie Dₐ et la seconde un débit d'une seconde valeur choisie D_{b}. Pour ces deux commandes différentes d'ouverture de la vanne, le dispositif d'alimentation fournit pareillement deux séquences successives, la première fournissant l'intensité élevée I₁ et la seconde l'intensité plus faible I₀. La seule différence entre ces deux exemples de commandes réside dans la durée de maintien de la première intensité élevée I₁. Pour commander une première ouverture de vanne fournissant un débit d'écoulement du fluide Dₐ, il faut maintenir l'intensité I₁ pendant un certain temps Tₐ et pour obtenir une ouverture de vanne supérieure fournissant un débit d'écoulement supérieur D_{b}, il suffit de maintenir l'intensité I₁ pendant une durée supérieure déterminée T_{b}. Bien entendu, si l'on maintient trop longtemps l'intensité I₁, on obtient l'ouverture maximum de la vanne (représentée en figure 3) correspondant au débit maximum.

La figure 4 est un diagramme illustrant le fonctionnement du dispositif d'alimentation du moteur 7, selon la présente invention. Ce dispositif d'alimentation comporte essentiellement un organe de commande 25 manoeuvrable par l'utilisateur afin d'afficher le débit souhaité pour la vanne, un microprocesseur 26 et un générateur de courant 27. Le signal de sortie 28 de l'organe de commande 25 est numérisé et les valeurs numériques obtenues sont utilisées dans le microprocesseur. Le microprocesseur 26 transforme dans un premier temps la valeur numérique du signal de l'organe de commande 25 selon une fonction prédéterminée de façon à fournir un signal représentatif de la position angulaire que devra prendre la pièce de commande 3 pour provoquer le niveau de pincement du tube entraînant le débit d'écoulement du fluide tel qu'indiqué par l'organe de commande 25. Ensuite, le microprocesseur établit, en fonction de la valeur du signal, la durée pendant laquelle le générateur de courant 27 devra fournir la première intensité d'alimentation I₁, et au terme de laquelle le générateur de courant 27 fournit ensuite la seconde intensité d'alimentation plus basse I₀ pour le maintien en position de la vanne réglée ainsi pour le débit souhaité, pour toute durée désirée.

## Revendications

1. Vanne à débit variable comprenant un moteur électrique (7) engagé de façon réversible avec une pièce de commande de débit (3) sollicitée par un ressort (11) vers une position d'aplatissement d'un tube souple dans lequel peut s'écouler un fluide, le moteur (7) étant monté pour déplacer la pièce de commande à l'encontre de la force du ressort (11) ; caractérisée en ce qu'elle comprend un dispositif d'alimentation (26, 27) pour fournir au moteur du type à courant continu un premier courant constant (I₁) de valeur suffisante pour faire tourner le moteur pendant un intervalle de temps (Ta, Tb) variable en fonction du débit souhaité, et ensuite un deuxième courant constant de valeur plus faible, ce courant de valeur plus faible étant suffisant pour maintenir le moteur dans sa position à l'encontre de la force du ressort.

2. Vanne selon la revendication 1, caractérisée en ce qu'elle comprend, dans un carter (1), le tube souple (2) et un mécanisme de commande provoquant un niveau variable de pincement du tube (2), ce mécanisme de commande comprenant :
- ladite pièce de commande (3) montée par une articulation (4) dans le carter (1) et comportant une zone d'appui (5) pour effectuer le pincement du tube (2) ainsi qu'un secteur denté (6) centré sur l'axe d'articulation (4) ;
- un pignon (10) monté en rotation dans le carter et formant avec le secteur denté un engrenage continuellement en prise ; et
- ledit moteur (7) entraînant en rotation le pignon (10).

## Patentansprüche

1. Flußsteuerventil, das einen Elektromotor (7) aufweist, welcher umkehrbar mit einem Flußeinstellelement (3) in Eingriff steht, das von einer Feder (11) zu einer abgeflachten Position eines elastischen Rohrs bzw. Schlauchs vorgespannt ist, in dem ein Strömungsmittel fließen kann, wobei der Motor (7) derart angeordnet ist, daß er das Einstellelement entgegen der Kraft der Feder (11) bewegt, dadurch gekennzeichnet, daß das Ventil eine Versorgungseinrichtung (26, 27) aufweist, um den Gleichstrommotor während eines sich als eine Funktion der gewünschten Strömung ändernden Zeitintervalls (Ta, Tb) mit einem ersten konstanten Strom (I₁) mit einem ausreichenden Wert zum Drehen des Motors zu versorgen, und danach mit einem zweiten konstanten Strom mit einem niedrigeren Wert zu versorgen, wobei der niedrigere Wert ausreichend ist zum Halten des Motors in seiner Lage entgegen der Kraft der Feder.

2. Ventil gemäß Anspruch 1, dadurch gekennzeichnet, daß das Ventil in einem Gehäuse (1) ein elastisches Rohr bzw. einen elastischen Schlauch (2) und einen Steuermechanismus zur Gewährleistung eines veränderbaren Abklemmniveaus bzw. -grades des Rohrs (2) aufweist, wobei der Steuermechanismus folgendes aufweist:
das Einstellelement (3), das mittels einer schwenkbaren Aufhängung (4) an dem Gehäuse (1) angebracht ist und einen Anlage- bzw. Druckbereich (5), um das Rohr abzuklemmen bzw. abzudrücken, sowie einen gezahnten Abschnitt (6) aufweist, welcher auf der Schwenkachse (4) zentriert ist;
ein Zahnrad (10), das in dem Gehäuse drehbar angebracht ist und mit dem gezahnten Abschpitt ein ständig in Eingriff stehendes Getriebe bildet; und
den das Zahnrad (10) antreibenden Motor (7).

## Claims

1. A variable flow valve comprising an electric motor (7) reversibly engaged with a flow adjustment part (3) biased by a spring (11) towards a flattened position of an elastic tube in which a fluid may flow, the motor (7) being arranged to move the adjustment part against the force of the spring; characterized in that it comprises a supply device (26, 27) to provide the motor, of d.c. type, with a first constant current (I₁) of a value sufficient to rotate a motor during a time interval (Ta, Tb) which varies as a function of the desired flow, and thereafter with a second constant current of a lower value, this lower value being sufficient to maintain the motor in its position against the force of the spring.

2. The valve according to claim 1, characterized in that it comprises, in a housing (1), the elastic tube (2) and a control mechanism for ensuring a variable pinching level of the tube (2), this control mechanism comprising:
- said adjustment part (3) mounted through an articulation (4) to the housing (1) and having a pressing region (5) to pinch the tube and a toothed sector (6) centered on the articulation axis (4);
- a pinion (1) rotatably mounted in the housing and forming with the toothed sector a meshed gear; and
- said motor (7) rotating the pinion (10).
